# EUROPÄISCHE PATENTSCHRIFT

(11) **EP 1 507 992 B1**
(45) Veröffentlichungstag und Bekanntmachung des Hinweises auf die Patenterteilung: **02.11.2005**
(21) Anmeldenummer: 03755122.3
(22) Anmeldetag: 23.05.2003
(51) Int. Cl.: F16H 61/00

(54) **GETRIEBEGEHÄUSE UND GETRIEBEBAUEINHEIT**
GEARBOX HOUSING AND GEARBOX MODULE
CARTER DE BOITE DE TRANSMISSION ET MODULE DE TRANSMISSION

(30) Priorität: 25.05.2002 DE 10223433
(43) Veröffentlichungstag der Anmeldung: 23.02.2005
(73) Patentinhaber: Voith Turbo GmbH & Co. KG, 89522 Heidenheim (DE)
(72) Erfinder: KÖRNER, Tillmann, 89551 Zang (DE); NITSCHE, Martin, 89547 Gerstetten (DE); EUBLER, Hans-Peter, 89522 Heidenheim (DE)
(74) Vertreter: Dr. Weitzel & Partner
(86) Internationale Anmeldenummer: PCT/EP2003/005419
(87) Internationale Veröffentlichungsnummer: WO 2003/100297

(56) Entgegenhaltungen:
- DE-A- 19 950 967
- US-A- 1 722 581
- US-A- 5 584 207

## Beschreibung

Die Erfindung betrifft ein Getriebegehäuse, im einzelnen mit den Merkmalen aus dem Oberbegriff des Anspruchs 1; ferner eine Getriebebaueinheit.

Getriebegehäuse sind in verschiedenen Ausführungen bekannt. Stellvertretend wird beispielsweise auf DE 199 50 967 A1 verwiesen. Diese offenbart eine Steuerungsplattform für eine Getriebebaueinheit, welche im Bereich eines Betriebsmittels bzw. Ölsumpfes im Gehäuse der Getriebebaueinheit angeordnet ist, wobei der Ölsumpf von einer Ölwanne umschlossen wird. Dieser Bereich bildet dabei einen unteren Getriebegehäuseteil, welcher mit einem oberen Getriebegehäuseteil zu einer baulichen Einheit - dem Getriebegehäuse - verbunden ist. Die Anbindung erfolgt über Befestigungselemente, beispielsweise in Form von Schrauben. Da derartige Getriebebaueinheiten für unterschiedliche Einsatzzwecke unterschiedlich dimensioniert sind, stellt sich insbesondere bei schwereren Getrieben das Problem einer einfachen Montage und Demontage bzw. einer leichten Zugängigkeit zum Getriebeinnenraum für Service-Reparatur- und Austauscharbeiten. Ein weiteres Problem bei der Montage stellt das exakte Einfädeln von Sensoren dar. Auch aus Arbeitsschutzgründen ist zur Montage und Demontage, insbesondere für Service und Reparatur sowie Austauschaktionen eine zusätzliche Hilfsvorrichtung, in der Regel ein Hubwagen, erforderlich, wobei die Trennung bzw. Öffnung des Gehäuses auch nicht ohne weiteres vonstatten gehen kann. Bei besonders schweren Ausführungen der Getriebegehäuse ist es des weiteren schwierig, den unteren Gehäuseteil exakt zu positionieren und zu befestigen. Wird das Getriebegehäuse aufgehangen, muß der untere Gehäuseteil von unten befestigt werden, wobei aufgrund der Schwere des Gehäuseunterteiles eine exakte Positionierung nur schwer möglich ist, d.h. nur mit zusätzlichen Hilfsmitteln erfolgen kann. Ferner stellt auch die Lösung des unteren Gehäuseteiles eine gewisse Problematik dar, insbesondere ist auch hier wieder eine Sicherungseinrichtung erforderlich, die das untere Gehäuseteil abstützt und damit das Service-Personal entlastet.

Geteilte Getriebegehäuse sind auch in einer Vielzahl von weiteren Ausführungen bekannt. Stellvertretend wird dabei auf US 1,722,581 und US 5,584,207 verwiesen. Aus der Druckschrift US 1,722,581 ist ein gattungsgemäßes Getriebegehäuse vorbekannt, welches ein Zugmittelgetriebe umschließt. Das Gehäuse ist in vertikaler Richtung unterteilt ausgeführt, wobei der eine Gehäuseteil gegenüber dem anderen Gehäuseteil verschwenkbar ist. Mit dieser Ausführung sind die Elemente des Zugmittelgetriebes im unteren Gehäuseteil gelagert. Dies hat jedoch den Nachteil, dass zum einen nur der obere Gehäuseteil in einfacher Art und Weise verschwenkt werden kann, da das Hauptgewicht im unteren Gehäuseteil gelagert ist und ferner bei Verwendung einer derartigen Konstruktion für ein Schaltgetriebe insbesondere beim Einsatz in Fahrzeugen eine entsprechende Zugängigkeit zu den leistungsübertragenden Elementen und bei Integration von Steuer- und Regeleinrichtungen im Getriebegehäuse nicht gegeben wäre. Ferner ist die Sicherheit gerade bei sehr großen Getriebebaueinheiten hinsichtlich des zu verschwenkenden Teils für das Wartungspersonal nicht mehr gewährleistet, da hier zusätzliche Maßnahmen getroffen werden müssen, um bei Lösung der beiden Gehäuseteile voneinander diese in ihrer Lage zu sichern.

Eine andere Ausführung eines mehrteiligen Gehäuses ist aus der Druckschrift US 5,584,207 vorbekannt. Bei diesem erfolgt die Teilung in vertikaler Richtung, wobei ebenfalls auf einfache Art und Weise durch Verschwenken eine Deckels um eine in vertikaler Richtung ausgerichtete Achse eine Zugängigkeit zum Innenraum des Getriebes gewährleistet ist. Diese Ausführung ist jedoch in keiner Weise für Getriebe in Fahrzeugen geeignet, insbesondere von Getrieben in Form von Schaltgetrieben mit einer Vielzahl von einzelnen Gangstufen, die sich durch einen entsprechend aufgebauten mechanischen Getriebeteil auszeichnen.

Der Erfindung liegt daher die Aufgabe zugrunde, ein Getriebegehäuse derart weiterzuentwickeln, daß die genannten Nachteile vermieden werden, insbesondere auch für die Getriebebaueinheiten zur Übertragung höherer Leistungen, welche aufgrund der erforderlichen Dimensionierung auch ein entsprechendes Gewicht aufweisen, eine leichte Montage des Getriebegehäuses zulassen und des weiteren noch eine leichte Zugängigkeit zu den leistungsübertragenden Elementen ermöglicht. Ferner soll sich das Getriebegehäuse bei Verwendung zum Umschließen leistungsübertragender Elemente durch eine leichte Handhabung und Servicefreundlichkeit auszeichnen, d.h. Reparatur- und Austauschaktionen sollen unproblematisch vonstatten gehen können und ohne zusätzliche Hilfsmittel auskommen.

Es ist bei der Montage und Demontage des Getriebegehäuses, insbesondere von Elementen aus dem Getriebe immer neben der leichten Zugängikeit auch auf die Sicherheit für das Servicepersonal abzustellen, um gerade bei großen Getriebebaueinheiten Verletzungen, die durch die Handhabung der zusätzlich vorzusehenden Sicherheitsmechanismen, wie beispielsweise Hubwagen etc. unter Umständen auftreten können, zu vermeiden.

Die erfindungsgemäße Lösung ist durch die Merkmale des Anspruchs 1 charakterisiert. Vorteilhafte Ausgestaltungen sind in den Unteransprüchen wiedergegeben.

Das Getriebegehäuse umfaßt wenigstens einen ersten oberen Gehäuseteil und einen zweiten unteren, einen Betriebsmittelsumpf wenigstens teilweise umschließenden Gehäuseteil, die miteinander lösbar verbunden sind. Der obere Gehäuseteil dient der Aufnahme und Lagerung der drehmomentübertragenden Beiteile. Die Unterteilung des Gehäuses erfolgt in vertikaler Richtung. Erfindungsgemäß sind der untere, das Betriebsmittel, insbesondere den Ölsumpf aufnehmende Gehäuseteil und der obere Gehäuseteil nur teilweise lösbar miteinander verbunden, indem diese an einer Seite über eine drehgelenkige Verbindung miteinander gekoppelt werden, die ein Verschwenken des einen Gehäuseteiles gegenüber dem anderen Gehäuseteil um eine theoretische Schwenkachse, welche in einer Verbindungsebene zwischen beiden Gehäuseteilen liegt, und die durch die Anordnung der Mittel zur lösbaren Verbindung, insbesondere die Befestigungselemente, beschreibbar ist, ermöglicht, wobei beim Verschwenken die Verbindung zwischen dem oberen und unteren Gehäuseteil im Bereich der theoretischen Schwenkachse bestehen bleibt. Das Verschwenken erfolgt dabei im wesentlichen in vertikaler Richtung. Dazu ist im Bereich der theoretischen Schwenkachse wenigstens ein Drehgelenk zwischen oberem und unterem Gehäuseteil vorgesehen, über welches die Verbindung und um dessen Drehachse der Verschwenkvorgang erfolgt. Dabei ist an den von der drehgelenkigen Verbindung im Verbindungsbereich freien Seiten wenigstens ein Sicherheitsmechanismus zwischen oberem und unterem Gehäuseteil vorgesehen. Der Sicherheitsmechanismus dient dabei bei Aufhebung der lösbaren Verbindung zwischen oberem und unterem Gehäuseteil zur Begrenzung des Schwenkwinkels α zwischen dem oberen und dem unteren Gehäuseteil auf einem Begrenzungswinkel β. Der Sicherheitsmechanismus muß dabei manuell betätigt werden, um ein Verschwenken um einen Winkel größer dem Begrenzungswinkel β bis zur Erzielung des maximalen Verschwenkwinkels zu erzielen. Der maximale Verschwenkwinkel αₘₐₓ entspricht dabei dem durch das Drehgelenk und die Positionierung des Getriebegehäuses möglichen Verschwenkungswinkel des unteren Gehäuseteiles gegenüber dem oberen Gehäuseteil. Bei Positionierung des Getriebegehäuses in hängender Position ist der maximale Verschwenkwinkel zusätzlich durch die Aufhängeposition des Getriebegehäuses und durch die aufgrund der Gewichtskraft des Gehäuseunterteiles sich frei einstellende Position begrenzt, so dass ohne zusätzliche Hilfsmittel ein Verschwenkwinkel von > 0 bis wenigstens einschließlich 90° erzielt wird. Das Drehgelenk ist derart ausgeführt, daß die von diesem gebildete Verschwenkachse sich über wenigstens einen Teil einer der Seiten, welche die Kontur der Gehäuseunterteile bzw. Gehäuseoberteile im Verbindungsbereich in einer Ansicht auf dieser beschreiben, erstreckt. Die Verbindung zwischen dem oberen Gehäuseteil und dem unteren Gehäuseteil ist dabei vorzugsweise als Scharnierverbindung ausgeführt, d.h. einer Verbindung, die ein Verschwenken des einen Bauelementes gegenüber dem anderen um eine in der Verbindungsebene liegende theoretische Achse, die durch die Verbindung beschreibbar ist unter Beibehaltung der Kopplung zwischen dem oberen Gehäuseteil und dem unteren Gehäuseteil ermöglicht.

Unter Verbindungsebene wird die in vertikaler Richtung betrachtet in horizontaler Richtung oder einem Winkel zu dieser ausgerichtete Ebene bezeichnet, welche durch das Aneinanderliegen der zueinander weisenden Flächen von oberem und unterem Gehäuseteil charakterisiert ist. Der Verbindungsbereich zwischen beiden Gehäuseteilen kann durch
a) eine Verbindungsebene
   oder
b) eine Vielzahl einzelner aneinander gereihter Verbindungsebenen charakterisiert werden.

Bezüglich der konkreten Ausgestaltung der Scharnierverbindung bestehen keine Restriktionen. Diesbezüglich können alle technischen möglichen Ausführungen verwendet werden, wobei in der Regel jedoch immer das Scharnier von einem separaten Element gebildet wird, welches mit den beiden Gehäuseteilen verbunden wird.

Bezüglich der Ausgestaltung des Sicherheitsmechanismus bestehen eine Mehrzahl von Möglichkeiten. Dabei ist jedoch bei der Dimensionierung darauf zu achten, daß der Sicherheitsmechanismus geeignet sein muß, den unteren Gehäuseteil hinsichtlich seiner Lage gegenüber dem oberen Gehäuseteil bei Verschwenken um den Begrenzungswinkel β zu halten. Der Sicherheitsmechanismus selbst wird dabei in der Regel als formschlüssige Verbindung ausgeführt, vorzugsweise in Form einer Raster- oder Klinkenverbindung. Diese Art der Verbindung umfaßt ein erstes Element, welches mit dem oberen Gehäuseteil verbunden ist und ein zweites Element, welches mit dem unteren Gehäuseteil verbunden ist, wobei eines der beiden Elemente jeweils eine Ausnehmung umfaßt, während das andere einen Vorsprung aufweist, die ineinander eingreifen. Im normalen Einbauzustand, d.h. bei Verbindung zwischen dem oberen und unteren Gehäuseteil unter Bildung des geschlossenen Getriebegehäuses ist dabei der Sicherheitsmechanismus entlastet. Das den Vorsprung aufweisende Element ist in diesem Zustand unter Vorspannung in der Ausnehmung geführt, vorzugsweise ohne eine Krafteinwirkung auf das die Ausnehmung tragende Element. Der Sicherheitsmechanismus kommt erst zum Tragen bzw. der Formschluß zwischen erstem und zweitem Element wird erst bei Verschwenken des unteren Gehäuseteiles gegenüber dem oberen Gehäuseteil realisiert. Der Mechanismus ist dabei derart ausgelegt, daß der Formschluß bei Erreichen des Begrenzungswinkels β realisiert wird. Im einfachsten Fall ist dabei das mit dem oberen Gehäuseteil verbundene Element als Sperrklinke ausgeführt, welche schwenkbar am oberen Gehäuseteil befestigt ist und die in eine Ausnehmung an einem Rastelement, welches mit dem unteren Gehäuseteil verbunden ist, eingreift. Dabei wird die Sperrklinke hinsichtlich ihrer Lage durch den durch die Ausnehmung gebildeten Anschlag und des weiteren ein elastisches Element unter Vorspannung fixiert. Das elastische Element ist dabei vorzugsweise als Federeinheit ausgeführt. Erst bei Aufhebung der Vorspannung wird der Formschluß zwischen Sperrklinke und Ausnehmung erzielt. Eine Umkehrung der Zuordnung von Rastelement und Raste zu den Gehäuseteilen ist ebenfalls denkbar. Eine Aufhebung des Formschlusses erfolgt dann bei zusätzlicher Krafteinwirkung auf die Sperrklinke. Der Formschluss ist dabei derart ausgelegt, dass eine, von Seiten eines Monteurs per Hand aufgebrachte Kraft ausreicht, wobei diese aus Arbeitsschutzgründen nicht zu gering bemessen sein darf.

Gemäß einer besonders vorteilhaften Ausgestaltung ist der untere Getriebegehäuseteil derart ausgebildet, daß dieser bereits die elektronische und vorzugsweise auch die hydraulische Steuervorrichtung beinhaltet. Dabei wird unter elektronischer Steuervorrichtung die Gesamtheit aus elektronischer Steuereinrichtung, das heißt Steuergerät, Sensorik und Verbindungen zu den Stelleinrichtungen verstanden. Unter elektronischer Steuereinrichtung wird dabei das Steuergerät bzw. eine Einheit aus elektrischen und elektronischen Bauelementen verstanden, welcher die zur Ansteuerung der Getriebebaueinheit erforderlichen Größen zugeführt und in dieser verarbeitet werden, und die aus den Eingangsgrößen entsprechend des gewünschten Ansteuervorganges gebildete Stellgrößen ausgibt. Die Steuereinrichtung umfaßt dazu in der Regel eine Mehrzahl elektrischer und elektronischer Bauelemente, welche entsprechend der vorzunehmenden Verarbeitung der Eingangsgrößen einander zugeordnet und miteinander gekoppelt sind. Vorzugsweise sind eine Mehrzahl derartiger Bauelemente auf wenigstens einer Trägerplatte gemeinsam angeordnet und werden von einem Steuereinrichtungsgehäuse umschlossen. Dabei entsteht die Möglichkeit, daß die Trägerplatte vollständig im Steuereinrichtungsgehäuse integriert ist oder aber wenigstens einen Teilwandbereich des Steuereinrichtungsgehäuses bildet.

Unter einem weiteren Aspekt der Erfindung ist die gesamte elektronische Steuervorrichtung im Getriebegehäuse integriert und in unmittelbar räumlicher Nähe zur hydraulischen Steuervorrichtung angeordnet. Dies bedeutet, daß eine Mehrzahl, vorzugsweise alle Einrichtungen zur Erfassung einer den Fahrzustand und/oder die Funktionsweise der Getriebebaueinheit wenigstens mittelbar charakterisierenden Größen mit in der Getriebebaueinheit integriert sind und in räumlicher Nähe zur hydraulischen Steuervorrichtung angeordnet sind.

Unter hydraulischer Steuervorrichtung werden dabei die hydraulischen Verbindungen zwischen den Erfassungsmitteln einer Eingangsgröße und/oder der elektrischen Steuervorrichtung und den Stelleinrichtungen, welche in der Regel hydraulisch durch einen Druck beaufschlagt werden und die als Aktoren fungierenden Elemente und deren Kopplung mit den Stellelementen verstanden. Einbezogen werden dabei im wesentlichen alle, zur Betätigung beziehungsweise Einstellung der einzelnen Gangstufen erforderlichen zu betätigenden Elemente.

Vorzugsweise ist dabei jeder der Steuervor- bzw. einrichtungen - elektronische Steuereinrichtung und hydraulische Steuervorrichtung - ein entsprechendes Trägerelement zugeordnet, welche miteinander zu einer Trageinrichtung verbindbar sind, so daß eine Baueinheit, umfassend wenigstens die elektronische Steuereinrichtung und die hydraulische Steuervorrichtung bildbar ist. Diese kann dann auf einfache Art und Weise in ihrer Gesamtheit aus der Getriebebaueinheit herausgenommen werden. Eine weitere Möglichkeit besteht darin, beide - die elektronische Steuereinrichtung der elektronischen Steuervorrichtung und hydraulische Steuervorrichtung - auf einem zentralen Trägerelement anzuordnen und ebenfalls eine Baueinheit zu bilden. In beiden Fällen wir dabei die gesamte Baueinheit aus Trägerelement bzw. Trägerelementen, hydraulischer Steuervorrichtung und elektronischer Steuereinrichtung als Steuerungsplattform bezeichnet, die als handelbare Baueinheit anbietbar ist. Diese ist vorzugsweise im Gehäuseunterteil lagerbar.

Unter einem weiteren Aspekt ist dem Betriebsmittel- und/oder Steuermittel und/oder Schmiermittelkreislauf der Getriebebaueinheit eine Kühleinrichtung zugeordnet und im Gehäuse integriert. Diese kann verschiedenartig ausgestaltet sein, umfaßt jedoch in der Regel entweder wenigstens einen Kühler oder einen Wärmetauscher. Die Anordnung der Kühleinrichtung erfolgt dabei vorzugsweise neben einer der beiden Vorrichtungen - elektronischer Steuervorrichtung bzw. elektronischer Steuereinrichtung oder hydraulischer Steuervorrichtung - beziehungsweise zwischen beiden. Damit kann zusätzlich eine optimale Kühlung der elektronischen Baueinheit erzielt werden.

Vorzugsweise werden Kühleinrichtung, elektronische Steuervorrichtung und hydraulische Steuervorrichtung auf einem gemeinsamen Trägerelement oder aber jeweils einem eigenen Trägerelement, welche miteinander zu einer Baueinheit zusammenfassbar sind, angeordnet und bilden eine sogenannte Steuerungsplattform. Vorzugsweise werden des weiteren ein Großteil der in der Regel als Sensoren ausgeführten Erfassungseinrichtungen zur Ermittlung der in der Steuervor- bzw. Einrichtung zu verarbeitenden Eingangsgrößen der Getriebebaueinheit mit auf der Steuerungsplattform angeordnet bzw. in dieser integriert, um eine noch kompaktere Baueinheit zu schaffen, welche leicht austauschbar ist. In diesem Fall wäre die Steuervorrichtung ebenfalls fast vollständig auf dem Trägerelement angeordnet. Dieses Trägerelement ist dann im Getriebeuntergehäuseteil integriert.

Unter einem weiteren Aspekt der Erfindung ist der elektronischen Steuervorrichtung ein Gehäuse zugeordnet, welches vorzugsweise gegen Hydraulikflüssigkeit, beispielsweise Öl und/oder eine andere Flüssigkeit dicht ausgeführt ist. Die Steuereinrichtung kann dann ebenfalls im Ölsumpf der Getriebebaueinheit angeordnet werden. Dadurch besteht die Möglichkeit, die elektrischen und elektronischen Bauelemente der Steuereinrichtung einer wenigstens indirekten Kühlung durch das im Betriebsmittel- bzw. Ölsumpf der Getriebebaueinheit befindliche Betriebsmittel auszusetzen. Die öldichte Ausführung des Gehäuses bedingt jedoch zur Realisierung der elektrischen Verbindung zwischen der Steuereinrichtung und den, zur Erfassung der, den aktuellen Fahrzustand wenigstens mittelbar charakterisierenden Größen und/oder des Fahrerwunsches und/oder weiterer Randbedingungen erforderlichen Sensoren der Steuervorrichtung und den mittels der Steuervorrichtung anzusteuernden Aktoren zur Betätigung der einzelnen Elemente der Getriebebaueinheit, beispielsweise zur Realisierung des Gangwechsels und/oder zur Vorgabe von Eingangsgrößen durch eine übergeordnete Steuer- bzw. Regelvorrichtung, eine entsprechend gestaltete Durchführung am Gehäuse. Vorzugsweise werden dabei die einzelnen Kontaktelemente beziehungsweise Leitungen in einem elektrisch nicht leitfähigen und flüssigkeitsdichtem Material eingebettet durch das Steuereinrichtungsgehäuse geführt, so daß das Eindringen von schädlichen Stoffen, wie beispielsweise Öl, verhindert wird.

Die erfindungsgemäße Lösung wird nachfolgend anhand von Figuren erläutert. Darin ist im einzelnen folgendes dargestellt:
- Figur 1: verdeutlicht anhand einer Perspektivansicht die Möglichkeit einer erfindungsgemäßen Ausgestaltung eines Getriebegehäuses;
- Fig. 2a - 2c: verdeutlichen anhand dreier Ansichten eine mögliche Ausführung eines Sicherheitsmechanismus;
- Fig. 3a u. 3b: verdeutlichten in schematisch stark vereinfachter Darstellung eine Getriebebaueinheit mit erfindungsgemäßen Getriebegehäuse.
- Fig. 4a - 4c: verdeutlichen mögliche Anordnungen der drehgelenkigen Verbindungen.

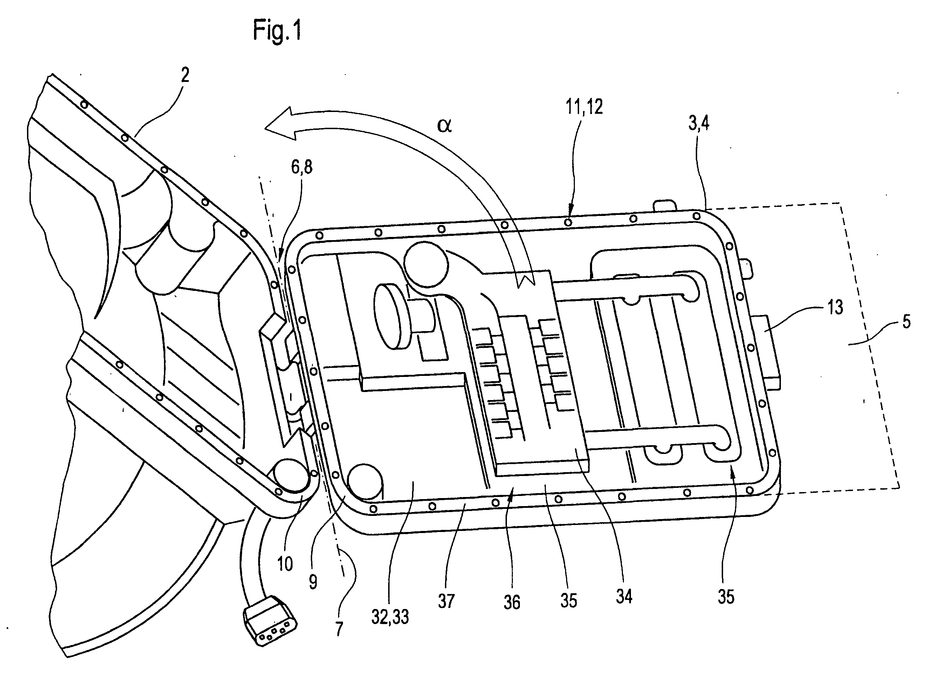

Die Figur 1 verdeutlicht in schematisch vereinfachter Darstellung anhand einer Perspektivdarstellung den Grundaufbau eines erfindungsgemäß gestalteten Getriebegehäuses 1 im aufgeklappten Zustand. Dieses ist in vertikaler Richtung betrachtet wenigstens zweiteilig ausgeführt und umfaßt einen ersten oberen Gehäuseteil 2 und einen zweiten unteren Gehäuseteil 3, welcher wenigstens teilweise einen Betriebsmittelsumpf aufnimmt. Der zweite untere Gehäuseteil 3 wird daher auch als Ölwanne 4 bezeichnet. Der erste obere Gehäuseteil 2 und der zweite untere Gehäuseteil 3 sind lösbar miteinander verbunden. Erfindungsgemäß ist jedoch im Bereich einer in vertikaler Richtung vorgesehenen Verbindungsebene 5 der zweite untere Gehäuseteil 3 mit dem ersten oberen Gehäuseteil 2 über eine drehgelenkige Verbindung 6 gekoppelt, die ein Verschwenken der Ölwanne 4 gegenüber dem ersten oberen Gehäuseteil 2 um eine theoretische Achse 7, welche in dieser Verbindungsebene 5 liegt und die einen Teil der Verbindung zwischen dem ersten oberen Gehäuseteil 2 und der Ölwanne 4 beschreibt, gegenüber dem oberen Gehäuseteil 2 unter Beibehaltung einer Verbindung zwischen oberem und unterem Gehäuseteil erlaubt. Dies gilt in Analogie auch für das Verschwenken des oberen Gehäuseteiles 2 gegenüber dem unteren Gehäuseteil 3. Die drehgelenkige Verbindung 6 ist dabei vorzugsweise als Scharnierverbindung 8 ausgeführt. Diese ist auf wenigstens einer Seite 9 der jeweils durch das untere Gehäuseteil 3 und 10 der durch das obere Gehäuseteil 2 beschriebenen Kontur in der Verbindungsebene 5 in der Ansicht von oben vorgesehen angeordnet. Der gesamte Trennbereich, welcher durch die Trennung bzw. Unterteilung in oberes und unteres Gehäuseteil 3 und 2 beschreibbar ist, kann durch eine Verbindungsebene 5 oder bei formschlüssiger Zusammenfügung durch eine Vielzahl einzelner Verbindungsebenen 5.1 bis 5.n beschreibbar sein.

Bei der in Figur 1 dargestellten Ausführung ist nur eine Verbindungsebene 5 in vertikaler Richtung, welche in Einbaulage horizontal ausgerichtet ist, vorgesehen. Die in dieser aneinander anliegenden Flächen von oberem und unterem Gehäuseteil 3 bzw. 2 beschreiben in einer Ansicht auf diese eine geometrische Form bzw. Kontur, welche durch mehrere Seiten bestimmt ist. Die Anordnung der drehgelenkigen Verbindung 6 erfolgt dabei an nur einer Seite, hier die Seiten 9 bzw. 10. Die Anordnung der Scharnierverbindung kann dabei an beliebigen einander gegenüberliegenden Seiten von oberem und unterem Gehäuseteil 3 bzw. 2 erfolgen. Die Verbindung an den übrigen Seiten erfolgt über Mittel zur lösbaren Verbindung 11, die entsprechend der Dimensionierung des Getriebegehäuses 1 an der Getriebebaueinheit anzuordnen und auszulegen sind. Diese umfassen in der Regel Befestigungselemente 12, die die Lage zwischen dem oberen Gehäuseteil 2 und dem unteren Gehäuseteil 3 sowohl in axialer als auch in vertikaler Richtung fixieren.

Unter den übrigen von der drehgelenkigen Verbindung 6 freien Seiten werden die bei einem Schnitt in oder parallel zur Verbindungsebene 5 sich ergebenden und die Kontur der Gehäuseteile beschreibenden Seiten einer die Geometrie in der Draufsicht beschreibenden Kontur verstanden.

Vorzugsweise erstreckt sich die drehgelenkige Verbindung 6 über jeweils einen Großteil der Erstreckung der einander gegenüberliegenden Seiten 9 und 10 von oberem und unterem Gehäuseteil 3 bzw. 2 bei Ansicht auf diese in der Verbindungsebene 5.

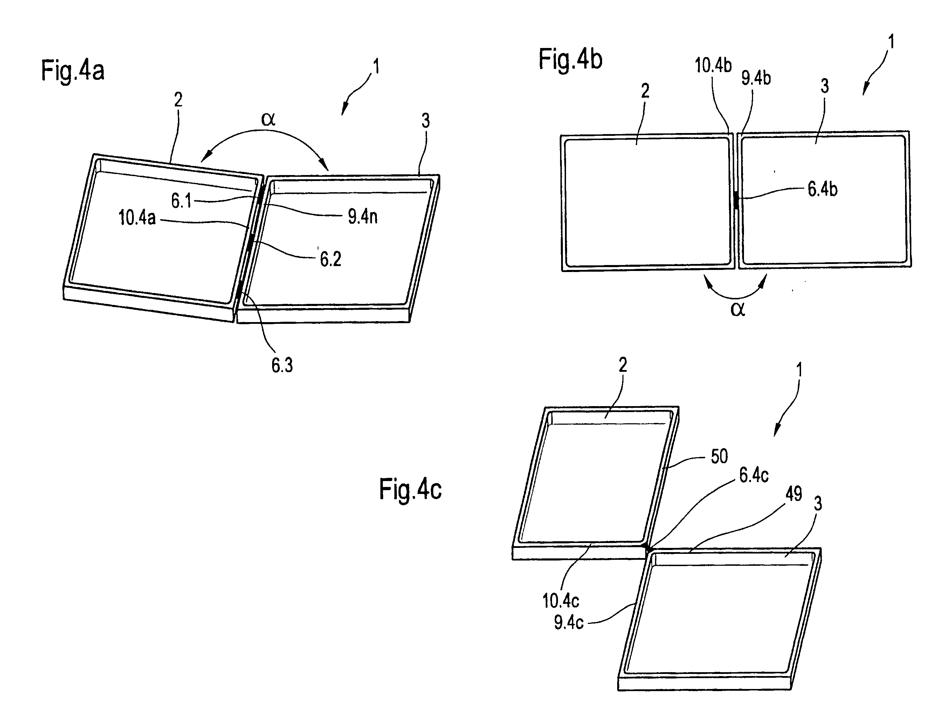

Denkbar ist jedoch auch eine Anordnung von mehreren einzelnen in bestimmtem Abstand a zueinander angeordneten drehgelenkigen Einzelverbindungen 6.1 bis 6.n über die Erstreckung der einander gegenüberliegenden Seiten 9 und 10, wie in Figur 4a dargestellt, oder bei kleineren Getriebebaueinheiten einer einzelnen drehgelenkigen Verbindung 6.4b im mittleren Bereich der Erstreckung der einander gegenüberliegenden Seiten 9.4b und 10.4b, wie in Figur 4b dargestellt. Eine weitere theoretisch mögliche Anordnung der drehgelenkigen Verbindung 6.4c besteht in der Anordnung im Grenzbereich zweier in einem Winkel aneinander angrenzenden Seiten 9.4c und 10.4c bzw. 10 und 50 der beiden Gehäuseteile 2.4 und 3.4, wie in Figur 4c dargestellt.

Um beim Lösen der Befestigungselemente 12 ein ungewünschtes schnelles Verschwenken des zweiten unteren Gehäuseteiles 3 gegenüber dem ersten oberen Gehäuseteil 2 bei hängendem Zustand des Gehäuses 1 zu vermeiden, ist wenigstens ein Sicherheitsmechanismus 13 vorgesehen, welcher nach Lösen der Befestigungselemente 12 ein teilweises Verschwenken des unteren Gehäuseteiles 3 gegenüber dem oberen Gehäuseteil 2 erlaubt, jedoch den Schwenkwinkel α durch Realisierung einer formschlüssigen Verbindung 14 auf einen Begrenzungswinkel β begrenzt. Dieser Sicherheitsmechanismus 13 kann unterschiedlich gestaltet sein. Lediglich durch eine weitere manuelle Betätigung kann ein Lösen des Sicherheitsmechanismus 13 erreicht werden, wobei dann ein Verschwenken zwischen dem oberen Gehäuseteil 2 und dem unteren Gehäuseteil 3 bis auf maximalen Schwenkwinkel möglich wird.

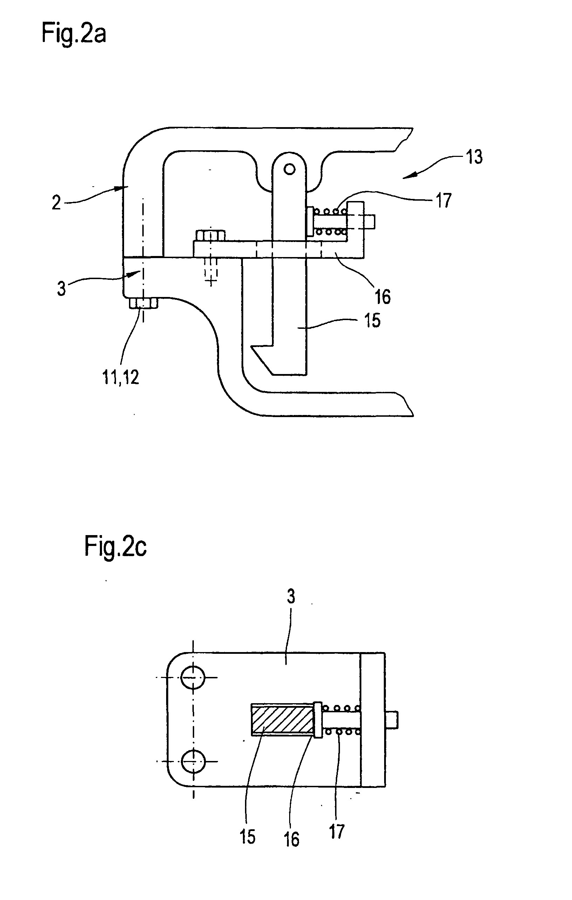

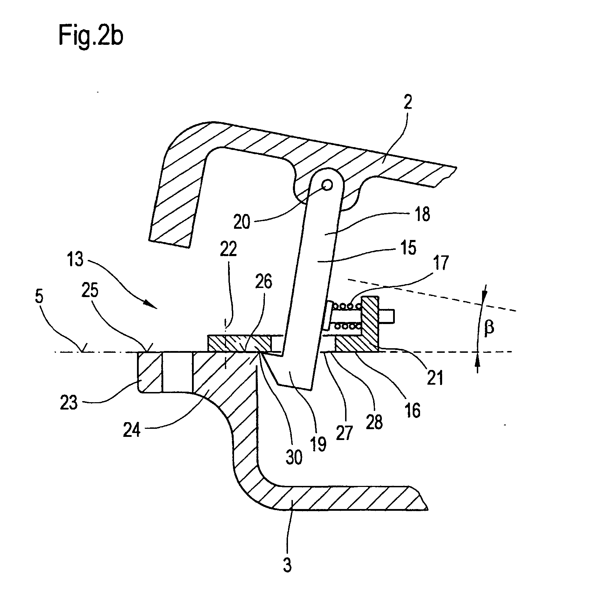

Der Sicherheitsmechanismus 13 ist in Figur 2a anhand eines Ausschnittes aus einer Schnittdarstellung durch ein Getriebegehäuse 1 wiedergegeben und ist im einfachsten Fall derart gestaltet, daß dieser wenigstens ein Rastelement 15 umfaßt, welches mit einem der beiden Getriebebauteile, im dargestellten Fall dem oberen Gehäuseteil, 2 ortsfest gekoppelt ist. Dieses Rastelement 15 ist vorzugsweise schwenkbar am oberen Gehäuseteil 2 gelagert. Das Rastelement 15 greift ferner formschlüssig in ein Raster 16, welches am zweiten Gehäuseteil, hier dem unteren Gehäuseteil 3 angeordnet ist bzw. mit diesem fest verbunden ist, ein, wobei im geschlossenen Zustand zwischen erstem oberen Gehäuseteil 2 und zweitem unteren Gehäuseteil 3 das Rastelement 15 lediglich in das Raster 16 eingreift, d.h. durch dieses ohne Kraftaufnahme frei geführt ist. Bei Lösung der Befestigungselemente 12 und Verschwenkung des zweiten unteren Gehäuseteiles 3 gegenüber dem ersten oberen Gehäuseteil 2 um einen geringen Verschwenkwinkel α₁, welcher dem Begrenzungswinkel β entspricht, rastet das Rastelement 15 im Raster 16 ein und bildet somit eine formschlüssige Verbindung. Das Rastelement 15 wird dazu in seiner Position in axialer Richtung durch eine Federeinheit 17 gehalten. Eine Lösung des Sicherheitsmechanismus 13 kann lediglich manuell durch ein Verschwenken des Rastelementes 15 gegenüber der Federeinheit 17 und damit gegen eine Vorspannkraft erfolgen. Eine entsprechende Ausführung für einen derartigen Sicherheitsmechanismus 13 ist in den Figuren 2a und 2b am Beispiel einer Ausführung als Sperrklinke 18 ausgeführt. Das Rastelement 15 ist dabei als Sperrklinke 18 ausgebildet. Dieses weist einen, einen Widerhaken 19 tragenden Teil auf, welcher in Einbaulage zum zweiten unteren Gehäuseteil 3 gerichtet ist bzw. am zu diesem gerichteten Ende der Sperrklinke 18 ausgebildet ist. Die Sperrklinke 18 ist schwenkbar am oberen Gehäuseteil 2 gelagert, im dargestellten Fall über ein Schwenklager 20. Das Raster 16 wird beispielsweise von einem Blechelement 21 gebildet, welches lösbar über Befestigungselemente 22 mit dem unteren Gehäuseteil 3 gekoppelt ist, vorzugsweise erfolgt die Anbindung im Bereich der Verbindungsebene 5. Zu diesem Zweck ist die Wand 23 des zweiten unteren Gehäuseteiles 3 im Bereich der Verbindungsebene 5 flanschartig ausgeführt, wobei dieser Flansch 24 neben der Verbindungsfläche 25 bzw. Anlagefläche für das obere Gehäuseteil 2 auch eine weitere Anlagefläche 26 für das Blechelement 21 bildet. Das Blechelement 21 weist mindestens eine, zur Sperrklinke 18 komplementäre Ausnehmung 27 auf, durch welche die Sperrklinke 18 hindurchführbar ist. Die Sperrklinke 18 wird dabei hinsichtlich ihrer Lage gegenüber dem Schwenklager 20 durch die Federeinheit 17 in der Ausnehmung 27 fixiert, wobei die Ausnehmung 27 gleichzeitig einen Anschlag 28 in horizontaler und vertikaler Richtung für die Sperrklinke 18 bildet. Die Ausnehmung 27 weist dabei einen Querschnitt auf, welcher wenigstens dem Querschnitt der Sperrklinke 18 im Bereich des Widerhakens 19 entspricht. Der Widerhaken 19 ist dabei in axialer Richtung zum Anschlag 28 hin gerichtet, so daß die zum Blechelement 21 weisende Fläche 29 bei Bewegung bzw. Verschwenken des unteren Gehäuseteils 3 gegenüber dem oberen Gehäuseteil 2 oder anders herum an der vom oberen Gehäuseteil 2 weggerichteten Fläche 30 des Blechelementes 21 zum Anliegen kommt. Lediglich durch Kraftaufbringung, separat, d.h. beispielsweise manuell durch das Service- und Wartungspersonal, auf die Sperrklinke 18 und eventuell weiter gegen die Vorspannkraft der Federeinheit 17 wird ein Lösen des Sicherheitsmechanismus 13 durch Führen der Sperrklinke 18 durch die Ausnehmung 27 realisiert. Die Figur 2b verdeutlicht dabei eine Ansicht im angeklinkten, d.h. verschwenkten Zustand um den Begrenzungswinkel β.

Die Figur 2c verdeutlicht eine Ansicht von oben auf den Sicherheitsmechanismus 13 im Schnitt auf das untere Gehäuseteil 3.

Die erfindungsgemäße Lösung bietet den Vorteil, daß unabhängig von der konkreten Ausgestaltung des unteren Gehäuseteiles 3, insbesondere der Ölwanne 4, beim Einsatz in einer Getriebebaueinheit 31 bei gewünschter Diagnose oder schnellem erforderlichen Wechsel von einzelnen Bauelementen nur bei schweren Getrieben das gesamte Getriebe, d.h. die Getriebebaueinheit 31, aufgehangen werden muß, wobei die Aufhängung am ersten oberen Gehäuseteil 2 erfolgt und der zweite untere Gehäuseteil 3 einfach abgeklappt wird. Entsprechend der Ausgestaltung der drehgelenkigen Verbindung 6 zwischen dem oberen und dem unteren Gehäuseteil 2 bzw. 3 ist keine weitere Abstützung für das untere Gehäuseteil 3 nach dem Abklappen nötig, und dieses kann im verschwenkten Zustand verbleiben. Der Monteur kann somit auf schnellem Wege und sehr leicht an die im Getriebegehäuse 1 gelagerten Elemente gelangen. Ein Hubwagen für die Getriebebaueinheit 31 ist nicht erforderlich. Ferner entfällt ein aufwendiges Einfädeln bei gewünschter Montage, d.h. Schließen des Gehäuses 1, da die Lage der Gehäuseteile 2 und 3 durch die über die gelenkige Verbindung 6 bestehende feste Kopplung zueinander fest bestimmt ist. Die Scharnierverbindung 8 wird dabei derart angeordnet und ausgeführt, daß dieses sich über einen wesentlichen Teil der entsprechenden Seiten 9 bzw. 10 erstreckt, um eine zusätzliche Fixierung in horizontaler Richtung bezüglich der Lage zwischen oberem und unterem Gehäuseteil 2 bzw. 3 zu erzielen.

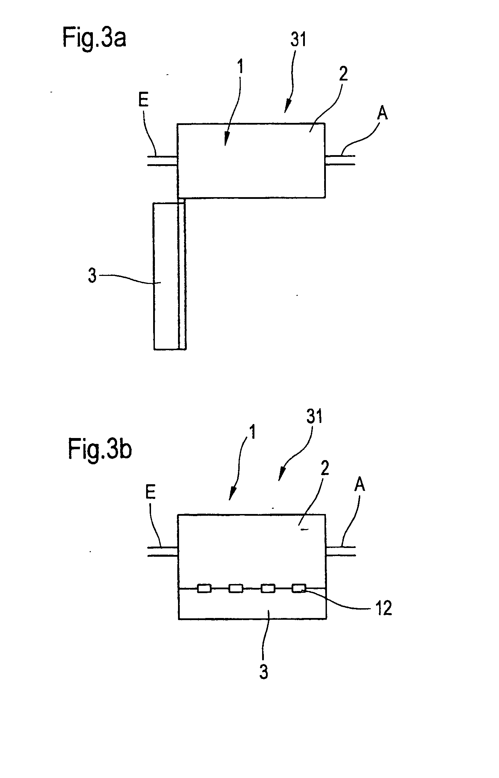

Die Figur 3a verdeutlicht dabei in schematisch stark vereinfachter Darstellung eine Getriebebaueinheit 31 mit einem erfindungsgemäß gestalteten Getriebegehäuse 1 im gelösten Zustand, während die Figur 3b die Getriebebaueinheit 31 im montierten Zustand wiedergibt. Zu erkennen sind lediglich der Eingang E und der Ausgang A sowie das Getriebegehäuse 1 aus erstem oberen Gehäuseteil 2 und zweitem unteren Gehäuseteil 3 sowie die Befestigungselemente 12.

Die in den Figuren 1 bis 3 getätigten Aussagen gelten nicht nur für Getriebegehäuse 1, die nur ein erstes oberes Gehäuseteil 2 und ein zweites unteres Gehäuseteil 3 umfassen. Ausführungen sind ebenfalls denkbar, bei denen zusätzlich in axialer Richtung ein Gehäusedeckel vorgesehen ist.

Gemäß einer besonders vorteilhaften Ausführung, zusätzlich beispielhaft in der Figur 1 dargestellt, umfasst der untere Gehäuseteil 3 eine elektronische Steuervorrichtung 32 mit einer Steuereinrichtung 33 sowie eine hydraulische Steuervorrichtung 34, wie in der Figur 5 dargestellt. Ferner ist zusätzlich gemäß einer besonders vorteilhaften Ausgestaltung eine Kühleinrichtung 35 vorgesehen. Dabei bestehen bezüglich der konkreten Ausgestaltung der elektronischen Steuervorrichtung 32 und der hydraulischen Steuervorrichtung 34 eine Vielzahl von Möglichkeiten. Im einfachsten Fall umfaßt die elektronische Steuervorrichtung 32 wenigstens eine elektronische Steuereinrichtung 33, welche wenigstens einen Eingang und einen Ausgang aufweist. Der Eingang bzw. die Eingänge sind dabei mit Einrichtungen zur wenigstens mittelbaren Erfassung einer, die Betriebsweise der Getriebebaueinheit wenigstens in der charakterisierenden Größe gekoppelt. Diese Einrichtungen sind dabei vorzugsweise in Form von Sensoren ausgeführt. Der Ausgang bzw. die Ausgänge sind dabei mit entsprechenden Stelleinrichtungen gekoppelt. Diese können dabei Bestandteil der hydraulischen Steuervorrichtung oder mit den Ausgängen der hydraulischen Steuervorrichtung gekoppelt sein. Die hydraulische Steuervorrichtung 34 umfaßt dazu wenigstens eine, vorzugsweise eine Mehrzahl hydraulischer Steuereinrichtungen, welche ebenfalls Eingänge und Ausgänge aufweisen. Die hydraulische Steuereinrichtung 34 kann dabei in Form von elektromagnetisch betätigbaren Ventileinrichtungen ausgeführt sein. Diese dienen der Ansteuerung von Stellelementen, welche auch als Aktuatoren bezeichnet werden. Diese wiederum dienen beispielsweise der Betätigung einzelner, zur Realisierung eines Gangwechsels zu betätigender Kupplungs- und/oder Bremseinrichtungen der Getriebebaueinheit 31. Dabei werden vorzugsweise alle Elemente der elektronischen Steuervorrichtung 32 und der hydraulischen Steuervorrichtung 34 auf einem Trägerelement 35 angeordnet, welches Bestandteil des unteren Gehäuseteils 3 ist bzw. von diesem gebildet wird. Damit wird es möglich, die komplette Verkabelung aller Aktuatoren und Sensoren mit der elektronischen Steuereinrichtung 33 zu erzielen, wodurch beim Lösen des unteren Gehäuseteiles 3 bzw. beim Verschwenken dieses gegenüber dem oberen Gehäuseteil 2 keine Rücksicht auf eventuell bestehende Verkabelungen zwischen dem oberen Gehäuseteil 2 und dem unteren Gehäuseteil 3 genommen werden muß. Das Trägerelement 35, die elektronische Steuervorrichtung 32 sowie die hydraulische Steuervorrichtung 34 bilden dabei eine Steuerungsplattform 36. Zusätzlich kann diese weitere Funktionselemente umfassen, beispielsweise Betriebsmittelfördereinrichtungen, Filtereinrichtungen etc.. Die Anordnung der elektronischen Steuereinrichtung 32 erfolgt dabei in der Regel noch einmal abgeschirmt vom Innenraum 37 des unteren Gehäuseteiles 3, insbesondere, wenn dies als Ölwanne 4 genutzt wird, um eine entsprechende Kapselung zu erzielen. Eine weitere Möglichkeit besteht darin, das zweite untere Gehäuseteil 3 mit einer in Richtung des oberen Gehäuseteiles im Inneren 47 vorgesehenen Ausbuchtung zu versehen und die elektronische Steuervorrichtung 32 quasi von außen an den unteren Gehäuseteil 3 anzuflanschen, wobei durch die Gehäusewand die Kopplung mit den anderen Elementen realisiert wird. Bezüglich der einzelnen konkreten Anordnungsmöglichkeiten von elektronischer Steuervorrichtung 32, hydraulischer Steuervorrichtung 34, den einzelnen Sensoren und Aktuatoren sowie den Funktionselementen bestehen eine Vielzahl von Möglichkeiten. Dazu wird auf die Druckschrift DE 199 50 967 A1 verwiesen. Der Offenbarungsgehalt dieser Druckschrift bezüglich der möglichen Anordnungen der einzelnen Elemente einer Steuerungsplattform 36 wird hiermit voll umfänglich in den Offenbarungsgehalt dieser Anmeldung mit einbezogen.

### Bezugszeichenliste

- 1: Getriebegehäuse
- 2: erster oberer Gehäuseteil
- 3: zweiter unterer Gehäuseteil
- 4: Ölwanne
- 5: Verbindungsebene
- 6; 6.1, 6.n; 6.4b, 6.4c: drehgelenkige Verbindung
- 7: theoretische Verbindungsachse
- 8: Scharnierverbindung
- 9; 9.4b; 9.4c: Seite der querschnittsbeschreibenden Geometrie bei einem Schnitt parallel zur Verbindungsebene durch den unteren Gehäuseteil
- 10; 10.4b;: Seite der querschnittsbeschreibenden Geometrie bei einem Schnitt
- 10.4c: parallel zur Verbindungsebene durch den oberen Gehäuseteil
- 11: Mittel zur lösbaren Verbindung
- 12: Befestigungselement
- 13: Sicherheitsmechanismus
- 14: formschlüssige Verbindung
- 15: Rastelement
- 16: Raster
- 17: Federeinheit
- 18: Sperrklinke
- 19: Widerhaken
- 20: Schwenklager
- 21: Blechelement
- 22: Befestigungselement
- 23: Wand
- 24: Flansch
- 25: Verbindungsfläche
- 26: Anlagefläche
- 27: Ausnehmung
- 28: Anschlag
- 29: zum Blechelement weisende Fläche
- 30: vom oberen Getriebegehäuseteil 2 wegweisende Fläche
- 31: Getriebeeinheit
- 32: elektronische Steuervorrichtung
- 33: Steuereinrichtung
- 34: hydrodynamische Steuervorrichtung
- 35: Trägerelement
- 36: Steuerungsplattform
- 37: Innenraum

## Patentansprüche

1. Getriebegehäuse (1)
1.1 mit mindestens einem ersten oberen Gehäuseteil (2) und einem zweiten unteren Gehäuseteil (3), die lösbar miteinander verbindbar sind;
1.2 oberer und unterer Gehäuseteil (2, 3) sind teilweise lösbar miteinander verbunden;
1.3 mit mindestens einer drehgelenkigen Verbindung (6; 6.1, 6.n; 6.4b; 6.4c) zwischen dem oberen Gehäuseteil (2) und dem unteren Gehäuseteil (3), welche in einer Ansicht auf dieVerbindungsebene (5), an einer die kontur das Gehäuseteile (2, 3) beschreibenden Seite (9, 10; 9.4b, 10.4b; 9.4c, 10.4c) angeordnet sind und eine theoretische Schwenkachse (7) zum Verschwenken der Gehäuseteile gegeneinander unter Beibehaltung der Verbindung zwischen diesen Bauteilen ermöglichen;
1.4 mit Mitteln zur Befestigung an den von der drehgelenkigen Verbindung (6; 6.1; 6.4b; 6.4c) freien Seiten;
**gekennzeichnet durch** die folgenden Merkmale:
1.5 zwischen dem oberen und unteren Gehäuseteil (2, 3) ist im von der drehgelenkigen Verbindung freien Bereich ein Sicherheitsmechanismus (13) zur Begrenzung des Verschwenkwinkels auf einen Begrenzungswinkel β vorgesehen;
1.6 der Sicherheitsmechanismus umfasst mindestens ein Rastelement (15) und ein Raster (16);
1.7 das Rastelement ist mit einem der beiden Gehäuseteile (2, 3) fest verbunden und an diesem schwenkbar gelagert;
1.8 das Raster (16) ist am anderen Gehäuseteil (3, 2) gelagert;
1.9 das Rastelement (15) wird im verbundenen Zustand der beiden Gehäuseteile unter Vorspannung frei von einer Kraftwirkung auf das Raster (16) in diesem geführt, wobei bei Lösen der Verbindung zwischen dem oberen Gehäuseteil und dem unteren Gehäuseteil (2, 3) beim Verschwenken um den Begrenzungswinkel β Rastelement (15) und Raster (16) derart miteinander in Wirkverbindung bringbar sind, dass ein Formschluss erzielt wird, der nur **durch** zusätzliche Krafteinwirkung aufhebbar ist.

2. Getriebegehäuse (1) nach Anspruch 1, **dadurch gekennzeichnet, dass** sich die drehgelenkige Verbindung (6) über die gesamte Erstreckung der Seite erstreckt.

3. Getriebegehäuse (1) nach Anspruch 1, **dadurch gekennzeichnet, dass** eine drehgelenkige Verbindung (6.4b) vorgesehen ist, welche im Mittenbereich der Erstreckung der Seiten (9, 10) der Gehäuseteile (2, 3) angeordnet ist

4. Getriebegehäuse nach Anspruch 1, **dadurch gekennzeichnet, dass** eine Mehrzahl einzelner drehgelenkiger Verbindungen (6.1, 6.2, 6.3) vorgesehen ist, die in gleichmäßigen oder ungleichmäßigen Abständen zueinander über die Erstreckung einer Seite (9, 10) der Gehäusebauteile (2, 3) angeordnet sind.

5. Getriebegehäuse (1) nach Anspruch 1, **dadurch gekennzeichnet, dass** eine drehgelenkige Verbindung (6.4c) vorgesehen ist, welche im Bereich des Schnittpunktes zweier Seiten (9.4c, 49, 10.4c, 50) angeordnet ist.

6. Getriebegehäuse (1), nach einem des Ansprüche 1 bis 5, **dadurch gekennzeichnet, dass** das Raster (16) am unteren Gehäuseteil (3) und das Rastelement (15) am oberen Gehäuseteil (2) angeordnet sind.

7. Getriebegehäuse (1) nach einem der Ansprüche 1 bis 6, **dadurch gekennzeichnet, dass** das Rastelement (15) als Sperrklinke (18) mit Widerhaken (19) ausgeführt ist.

8. Getriebebaueinheit (31) mit einem Getriebegehäuse (1) nach einem der Ansprüche 1 bis 7 zur Aufnahme der leistungsübertragenden Bauteile.

9. Getriebebaueinheit (31) nach Anspruch 8, **dadurch gekennzeichnet, dass** es in diesem eine elektrische Steuereinheit, eine hydraulische Steuereinheit zu einer Steuerungsplattform zusammengefasst sind, welche im Gehäuseunterteil (3) gelagert ist.

10. Getriebebaueinheit (31) nach einem der Ansprüche 8 oder 9, **dadurch gekennzeichnet, dass** die leistungsübertragenden Bauteile im oberen Gehäuseteil (2) gelagert sind.

11. Getriebebaueinheit (31) nach einem der Ansprüche 8 bis 10, **dadurch gekennzeichnet, dass** die elektronische Steuereinheit alle Sensoren und Verbindungen zu den Stelleinrichtungen im unteren Gehäuseteil (3) angeordnet sind.

## Claims

1. A gearbox casing (1)
1.1 with at least one first upper casing part (2) and a second lower casing part (3) which can be joined with each other in a detachable manner;
1.2with the upper and the lower casing part (2, 3) being joined with each other in a partly detachable way;
1.3with at least one hinged connection (6; 6.1, 6.n; 6.4b; 6.4c) between the upper casing part (2) and the lower casing part (3) which are arranged in a view on the connecting plane (5) at a side (9, 10; 9.4b, 10.4b; 9.4c, 10.4c) describing the contour of the housing parts and enable a theoretical swiveling axis (7) for swiveling the casing parts against one another by maintaining the connection between said components;
1.4with means for fastening to the sides free from the hinged connection (6; 6.1; 6.4b; 6.4c);
**characterized by** the following features:
1.5 between the upper and lower casing part (2, 3) a safety mechanism (13) for limiting the swiveling angle to a limiting angle β is provided in the region which is free from the hinged connection;
1.6the safety mechanism comprises at least one latching element (15) and a latch (16);
1.7the latching element is rigidly connected with one of the two casing parts (2, 3) and is held in a swiveling manner on the same;
1.8the latch (16) is held on the other casing part (3, 2);
1.9the latching element (15) is guided in the joined state of the two casing parts under pretension free from any action of force on the latch (16) in the same, such that upon detaching the connection between the upper casing part and the lower casing part (2, 3) latching element (15) and latch (16) can be brought into operative connection with one another during the swiveling about the limiting angle β that a positive lock is achieved which can only be removed by additional action of force.

2. A gearbox casing (1) according to claim 1, **characterized in that** the hinged connection (6) extends over the entire extension of the side.

3. A gearbox casing (1) according to claim 1, **characterized in that** a hinged connection (6.4b) is provided which is arranged in the middle region of the extension of the sides (9, 10) of the casing parts (2, 3).

4. A gearbox casing (1) according to claim 1, **characterized in that** a plurality of individual hinged connections (6.1, 6.2, 6.3) is provided which are arranged in regular or irregular intervals relative to one another over the extension of one side (9, 10) of the casing components (2, 3).

5. A gearbox casing (1) according to claim 1, **characterized in that** a hinged connection (6.4c) is provided which is arranged in the region of the point of intersection of two sides (9.4c, 49, 10.4c, 50).

6. A gearbox casing (1) according to one of the claims 1 to 5, **characterized in that** the latch (16) is arranged on the lower casing part (3) and the latching element (15) on the upper housing part (2).

7. A gearbox casing (1) according to one of the claims 1 to 6, **characterized in that** the latching element (15) is configured as a detent pawl (18) with barbs (19).

8. A transmission unit (31) with a gearbox casing (1) according to one of the claims 1 to 7 for receiving the power-transferring components.

9. A transmission unit (31) according to claim 8, **characterized in that** in the same there is combined an electric control unit, a hydraulic control unit into a control platform which is held in the lower part of the casing (3).

10. A transmission unit (31) according to one of the claims 8 or 9, **characterized in that** the power-transferring components are held in the upper casing part (2).

11. A transmission unit (31) according to one of the claims 8 to 10, **characterized in that** the electronic control unit, all sensors and connections to the actuating devices are arranged in the lower housing part (3).

## Revendications

1. Carter d'engrenages (1)
1.1 avec au moins une première partie de boîtier supérieure (2) et une seconde partie de boîtier inférieure (3) reliées entre elles de manière amovible,
1.2 les parties de boîtiers supérieure et inférieure (2, 3) étant reliées entre elles de manière partiellement amovible,
1.3 avec au moins un assemblage articulé pivotant (6 ; 6.1, 6.n ; 6.4b ; 6.4c) entre la partie supérieure de boîtier (2) et la partie inférieure de boîtier (3), qui sont disposés, en vue sur le plan de liaison (5), sur une face (9, 10 ; 9.4b, 10.4b ; 9.4c, 10.4c) décrivant le contour des parties de boîtier (2,3), et qui créent un axe de pivotement théorique (7) pour le pivotement des parties de boîtier l'une par rapport à l'autre en conservant l'assemblage entre ces parties de boîtier ;
1.4 avec des moyens pour la fixation sur les côtés dépourvus d'assemblage articulé pivotant (6 ; 6.1 ; 6.4b ; 6.4c) ;
**caractérisé par** les éléments suivants :
1.5 il est prévu entre les parties de boîtier supérieure et inférieure (2, 3) dans la zone sans assemblage articulé pivotant un mécanisme de sécurité (13) destiné à limiter l'angle de basculement à un angle limite β ;
1.6 le mécanisme de sécurité comprend au moins un élément d'encliquetage (15) et un taquet (16) ;
1.7 l'élément d'encliquetage est fixé à l'une des deux parties de boîtier (2, 3) et supporté de manière pivotante sur celle-ci ;
1.8 le taquet (16) est supporté sur l'autre partie de boîtier (3, 2) ;
1.9 l'élément d'encliquetage (15), dans l'étant assemblé des deux parties de boîtier, est guidé dans le taquet (16) sous précontrainte sans application de force sur le taquet, l'élément d'encliquetage (15) et le taquet (16) pouvant être reliés en liaison active lorsque la liaison entre la partie supérieure de boîtier et la partie inférieure de boîtier (2, 3) se défait lors du basculement sur l'angle limite β de manière à obtenir un engagement positif qui ne peut être aboli que par une application de force supplémentaire.

2. Carter d'engrenages (1) selon la revendication 1, **caractérisé en ce que** l'assemblage articulé pivotant (6) s'étend sur toute l'étendue de la face.

3. Carter d'engrenages (1) selon la revendication 1, **caractérisé en ce qu'**il est prévu un assemblage articulé pivotant (6.4b) qui est disposé dans la partie médiane de l'étendue des faces (9, 10) des parties de boîtier (2, 3).

4. Carter d'engrenages ■ selon la revendication 1, **caractérisé en ce qu'**il est prévu une pluralité d'assemblage articulés pivotants (6.1, 6.2, 6.3) qui sont disposés à intervalles réguliers ou irréguliers les uns par rapport aux autres sur l'étendue d'une face (9, 10) des parties de boîtier (2, 3).

5. Carter d'engrenages (1) selon la revendication 1, **caractérisé en ce que** qu'il est prévu un assemblage articulé pivotant (6.4c) qui est disposé au niveau du point d'intersection de deux faces (9.4c, 49, 10.4c, 50).

6. Carter d'engrenages (1) selon l'une quelconque des revendications 1 à 5, **caractérisé en ce que** le taquet (16) est disposé sur la partie inférieure de boîtier (3) et l'élément d'encliquetage (15) sur la partie supérieure de boîtier (2).

7. Carter d'engrenages (1) selon l'une quelconque des revendications 1 à 6, **caractérisé en ce que** l'élément d'encliquetage (15) est conformé comme un cliquet de verrouillage (18) muni d'une barbe (19).

8. Unité d'ensemble d'engrenages (31) avec un carter d'engrenages (1) selon l'une quelconque des revendications 1 à 7, destinée à recevoir les composants transmettant la puissance.

9. Unité d'ensemble d'engrenages (31) selon la revendication 8, **caractérisée en ce qu'**elle rassemble dans une plate-forme de commande une unité de commande électrique et une unité de commande hydraulique qui sont supportées dans la partie inférieure de boîtier (3).

10. Unité d'ensemble d'engrenages (31) selon l'une quelconque des revendications 8 ou 9, **caractérisée en ce que** les composants transmettant la puissance sont supportés dans la partie supérieure de boîtier (2).

11. Unité d'ensemble d'engrenages (31) selon l'une quelconque des revendications 8 à 10, **caractérisé en ce que** l'unité de commande électronique et tous les capteurs et connexions destinés aux dispositifs d'actionnement sont disposés dans la partie inférieure de boîtier (3).
